# EUROPEAN PATENT APPLICATION

(11) **EP 4 129 530 A1**
(43) Date of publication of application: **08.02.2023**
(21) Application number: 21776067.7
(22) Date of filing: 22.03.2021
(51) Int. Cl.: B22F 1/00, C22C 21/00, B33Y 10/00, B33Y 80/00, B33Y 70/00, B22F 10/22

(54) **ALUMINUM POWDER FOR METAL LAMINATE MOLDING, MANUFACTURING METHOD THEREOF, AND METAL LAMINATE MOLDED PRODUCT**

(30) Priority: 24.03.2020 JP 2020052647
(71) Applicant: Toyo Aluminium Kabushiki Kaisha, Osaka-shi, Osaka 541-0056 (JP); Tohoku University, Sendai-shi, Miyagi 980-8577 (JP); Technology Research Association For Future Additive Manufacturing, Tokyo, 101-0044 (JP)
(72) Inventor: HASHIZUME, Yoshiki, Osaka-shi, Osaka 541-0056 (JP); MURAKAMI, Isao, Osaka-shi, Osaka 541-0056 (JP); ISHIGAMI, Kenta, Osaka-shi, Osaka 541-0056 (JP); AKIYAMA, Sotaro, Osaka-shi, Osaka 541-0056 (JP); CHIBA, Akihiko, Sendai-shi, Miyagi 980-8577 (JP); AOYAGI, Kenta, Sendai-shi, Miyagi 980-8577 (JP)
(74) Representative: Grünecker Patent- und Rechtsanwälte PartG mbB
(86) International application number: PCT/JP2021/011717
(87) International publication number: WO 2021/193536

(57) **Abstract**

An object of the present invention is to provide an additive manufactured object which is free of solidification cracking due to, e.g., heat shrinkage during additive manufacturing of an aluminum alloy; which is free of anisotropy in strength, and has high strength and ductility. An aluminum alloy powder for additive manufacturing includes aluminum alloy particles in which not less than 0.01% by mass and not more than 1% by mass of a grain refiner is trapped. This grain refiner is at least one selected from the borides and carbides of group 4 elements.

## Description

### TECHNICAL FIELD

The present invention relates to a metallic powder used in a metal additive manufacturing device of a powder bed fusion type in which powder beds are fused together by irradiation with a laser beam or an electron beam.

### BACKGROUND ART

Metal additive manufacturing techniques, with which objects/parts of various shapes can be formed without using a mold, have been gathering attention in recent years. With such a technique, it is possible to produce not only prototypes to check their shapes, but also actually usable parts.

For such metal additive manufacturing, a powder bed fusion method is widely used, in which, after densely spreading a powder as a raw material to a certain thickness in a metal 3D printer, the powder is locally melted and sintered by being irradiated with a laser beam or an electron beam, and, by laminating this into numerous layers, the intended object is formed. In view of the performance of the laser/electron beam used, and the required accuracy of the shape of the object formed, the raw material powder (powder bed) densely spread at one time in the metal 3D printer is generally laminated with each layer having a thickness of 30 µm to 100 µm.

Metal additive manufactured objects of aluminum alloy are expected to make a significant contribution to a reduction in the weight of aircraft and automotive parts.

Compositions of aluminum alloys usable for additive manufacturing were conventionally limited to alloys for casting such as AlSi10Mg and ADC12. On the other hand, alloy compositions as described below have been proposed recently.

In particular, the below-identified Patent Document 1 discloses a high-strength aluminum alloy material using an aluminum alloy comprising Mg, Si, Ti, Sc, and Zr as its essential components, thereby making it possible to omit complex thermal processing, and perform thermal treatment without thermal stress and distortion.

The below-identified Patent Document 2 discloses an aluminum alloy material using an aluminum alloy comprising Zn and Mg as its essential components, and further containing at least one selected from Zr, Hf, Mo, Tb, Nb, Gd, Er and V; and optionally containing Cu, Si, Fe, Mn, Cr, Ti, Sc and/or other elements, thereby making it possible to omit complex thermal processing, and perform thermal treatment without thermal stress and distortion.

However, if additive manufacturing is performed using such an aluminum alloy, the average crystal grain size of the object thus formed tend to be large, and solidification cracking may occur due to, e.g., heat shrinkage during additive manufacturing, thereby affecting the strength and ductility of the object formed.

On the other hand, the below-identified Patent Document 3 discloses a method for performing additive manufacturing using an aluminum-based material comprising an aluminum alloy in which 1 to 30% by volume of ceramic metal particles such as TiB₂, TiC, SiC, Al₂O₃, BC, BN or Si₃N₄ are dispersed.

### PRIOR ART DOCUMENT(S)

### PATENT DOCUMENT(S)

Patent Document 1: Japanese Unexamined Patent Application Publication No. 2017-186642
Patent Document 2: Japanese Unexamined Patent Application Publication No. 2017-186651
Patent Document 3: Japanese Unexamined Patent Application Publication (Translation of PCT Application) No. 2018-512507

### SUMMARY OF THE INVENTION

### PROBLEMS TO BE SOLVED BY THE INVENTION

However, if additive manufacturing is performed using the method of Patent Document 3, the ceramic metal particles tend to segregate in the aluminum alloy, and solidification cracking may occur due to, e.g., heat shrinkage during additive manufacturing. Also, the ceramic metal particles may partially remain as inclusions after additive manufacturing, and could be starting points of cracks, thereby affecting the strength and ductility of the object obtained.

It is therefore an object of the present invention to provide an additive manufactured object which is free of solidification cracking due to, e.g., heat shrinkage during additive manufacturing of an aluminum alloy; which has no anisotropy in strength; and which is excellent in strength and ductility.

### MEANS FOR SOLVING THE PROBLEMS

The inventors of the present application diligently and repeatedly studied aluminum alloy powders used for additive manufacturing in order to solve the above problems, and discovered that, in additive manufacturing, by using, as a raw material, an aluminum alloy powder containing a specific amount of a grain refiner in its particles, it is possible to produce an additive manufactured object having no anisotropy in strength and free of solidification cracking. That is, the present invention is summarized in the following (1) to (6):
[1] An aluminum alloy powder for additive manufacturing, comprising particles of an aluminum alloy in which not less than 0.01% by mass and not more than 1% by mass of a grain refiner is trapped.
[2] The aluminum alloy powder according to [1], wherein the grain refiner is at least one selected from borides and carbides of group 4 elements.
[3] The aluminum alloy powder according to [1] or [2], wherein the grain refiner is TiB₂.
[4] The aluminum alloy powder according to any of [1] to [3], wherein the aluminum alloy forming the aluminum alloy powder is composed of at least one aluminum alloy selected from 2000 series alloys, 6000 series alloys and 7000 series alloys.
[5] A method for producing a metal additive manufactured object comprising the step of forming, by additive manufacturing, the metal additive manufactured object from the aluminum alloy powder according to any of [1] to [4],
   wherein the metal additive manufactured object has a solidified structure of crystal grains,
   wherein a number average of ratios of longest to shortest diameters of the respective crystal grains is not less than 1 and not more than 3, and
   wherein precipitates of which longest diameters are not more than 5 µm are scattered in the crystal grains of the solidified structure, the precipitates comprising at least one kind of precipitates selected from borides and carbides of group 4 elements.
[6] A metal additive manufactured object,
   wherein the metal additive manufactured object has a solidified structure of crystal grains,
   wherein a number average of ratios of longest to shortest diameters of respective crystal grains is not less than 1 and not more than 3,
   wherein precipitates of which longest diameters are not more than 5 µm are scattered in the crystal grains of the solidified structure, the precipitates comprising at least one kind of precipitates selected from borides and carbides of group 4 elements, and
   wherein the metal additive manufactured object contains not less than 0.01% by mass and not more than 1.2% by mass of the precipitates.

### EFFECTS OF THE INVENTION

The aluminum alloy powder for additive manufacturing according to the present invention provides the following advantages.

First, by using, as a raw material, the aluminum alloy powder for additive manufacturing according to the present invention, the object obtained has a uniform, fine, and non-anisotropic structure with no solidification cracking and no anisotropy in strength.

Further, the object obtained has a fine structure, and improved strength and ductility, too.

### BRIEF DESCRIPTION OF THE DRAWINGS

Fig. 1 is a micrograph of the cross section of an aluminum alloy powder for additive manufacturing obtained in Example 1.
Fig. 2 is a photograph showing EBSD observation results of a shaped object produced using the aluminum alloy powder for additive manufacturing obtained in Example 1.
Fig. 3 is a photograph showing EBSD observation results of a shaped object produced using an aluminum alloy powder for additive manufacturing obtained in Comparative Example 2.

### BEST MODE FOR CARRYING OUT THE INVENTION

An embodiment of the present invention is described below in detail. The present invention is directed to an aluminum alloy powder for additive manufacturing that is composed of aluminum alloy particles in which a specific amount of a grain refiner is trapped.

### [Aluminum alloy]

The aluminum alloy forming the aluminum alloy powder is not particularly limited, and may be a well-known one, provided that the alloy contains aluminum as its component largest in amount. An alloy known as wrought material, which is widely used in aircraft and automotive parts, is especially and most effective. Such alloys include, e.g., 2000 series alloys such as A2014, A2017 and A2024; 6000 series alloys such as A6061, A6062 and A6063; and 7000 series alloys such as A7017, A7050 and A7075.

### [Grain refiner]

The grain refiner is not particularly limited, if it provides a fining effect, that is, if the object obtained, which is described later, has a uniform, fine, and non-anisotropic structure. However, it is preferable to use at least one selected from the borides and carbides of group 4 elements in the periodic table, such as TiB₂, ZrB₂, HfB₂, TiC, ZrC and HfC. Among them, TiB₂ is particularly preferable, because it provides a higher fining effect.

The amount of the grain refiner is not less than 0.01% by mass and not more than 1% by mass relative to the entire aluminum alloy powder for additive manufacturing mentioned above. This is because if less than 0.01% by mass, the grain refiner cannot provide a sufficient fining effect, whereas, if more than 1% by mass, the grain refiner could become starting points of cracks, which could in turn result in brittle fracture. The amount of the grain refiner is more preferably not less than 0.01% by mass and not more than 0.5% by mass.

The particle sizes of the above grain refiner are preferably not less than 10 nm and not more than 10 um, and more preferably not less than 50 nm and not more than 5 µm. By setting the particle diameters to less than 10 nm and not more than 10 µm, the grain refiner can be uniformly dispersed in the powder.

### [Aluminum alloy powder for additive manufacturing]

As described above, the aluminum alloy powder for additive manufacturing is composed of the above aluminum alloy and grain refiner, with the grain refiner trapped in the aluminum alloy powder. Since the grain refiner is trapped in the powder, during additive manufacturing, described later, it is possible to reduce segregation of the grain refiner, thereby uniformly dispersing the grain refiner. Therefore, the additive manufactured object has a uniform, fine, and non-anisotropic structure, with no solidification cracking and no anisotropy in strength. Also, during additive manufacturing, the grain refiner can be sufficiently dissolved into the aluminum alloy matrix, and can act as nuclei for providing finer crystal grains. On the other hand, if a grain refiner is not trapped in the powder, that is, is present separately from the powder particles, since the grain refiner segregates and partially remains as inclusions after additive manufacturing, too, and could become starting points of cracks, strength and ductility tend to be insufficient. Also, in this case, during additive manufacturing, the grain refiner is not sufficiently dissolved into the aluminum alloy matrix, and tends not to act as nuclei for providing fine crystal grains.

### [Production of aluminum alloy powder for additive manufacturing]

The above aluminum alloy powder for additive manufacturing can be produced by (i) dissolving the aluminum alloy and a predetermined amount of the grain refiner, thereby obtaining molten aluminum alloy having a predetermined amount of this grain refiner; and (ii) spraying and cooling this molten alloy with the rotating disk method, the plasma rotating electrode method, the gas atomization method, etc.

The average particle diameter of the thus-produced aluminum alloy powder for additive manufacturing is, in terms of volume average particle diameter (D₅₀) measured by a grain/particle size distribution measuring device of a laser diffraction type, preferably not less than 10 µm and not more than 200 µm, and more preferably not less than 30 µm and not more than 120 um. If D₅₀ is less than 10 µm, the flowability of the powder tends to deteriorate, and the workability of additive manufacturing may deteriorate. On the other hand, if D₅₀ is more than 200 µm, for example, the surface roughness of the additive manufactured object obtained may deteriorate, or the powder may be caught on a blade, making uniform spreading impossible.

The average degree of circularity of the above aluminum alloy powder for additive manufacturing is preferably not less than 0.90 and not more than 1, and more preferably not less than 0.95 and not more than 1. The "degree of circularity" is the equivalent circle diameter calculated from the area of a grain, and divided by the equivalent circle diameter calculated from the circumference of the grain, and it does not exceed 1. This value can be obtained by image analysis from a photograph of the grain taken with a microscope. If the average degree of circularity obtained by averaging the degrees of circularity of 100 or more grains is not less than 0.90, the flowability required for additive manufacturing is ensured, and the content of oxide, which causes defects, tends to be low.

The above-described average particle diameter and average degree of circularity of the aluminum alloy powder for additive manufacturing can be set within respective target ranges by appropriately adjusting the amount of spraying per hour, spraying speed, rotational speed in the rotating disk method, etc.

### [Additive manufacturing]

The method for performing additive manufacturing using, as a raw material, the above aluminum alloy powder for additive manufacturing is not particularly limited, and various methods can be used. Preferably, however, additive manufacturing is performed using a metal additive manufacturing device of a type in which powder beds are fused together by irradiation of a laser beam or an electron beam. If additive manufacturing is performed using a laser beam or an electron beam, the irradiation energy density of the laser beam or the electron beam is preferably 10 to 100 J/mm³, and more preferably 20 to 60 J/mm³. This is also applicable to additive manufacturing using the powder deposition method.

During additive manufacturing, the above grain refiner is preferably heated to a temperature enough to be dissolved into the aluminum alloy matrix. Specifically, this temperature is preferably not less than 1000°C and not more than 4500°C, and more preferably not less than 1200°C and not more than 3500°C. If the temperature is higher than the above range, volatile alloy components such as Zn and Mg will volatilize, so that the alloy composition may change, and the volatilized alloy components may contaminate the interior of the additive manufacturing device. On the other hand, if the above temperature is lower than the above range, it is difficult to sufficiently dissolve the above grain refiner into the aluminum alloy matrix, and thus to disperse the grain refiner uniformly in the aluminum alloy matrix. Therefore, the structure of the object obtained tends to show anisotropy, and is less likely to be uniform and fine. As a result, sufficient strength and ductility may not be obtained.

During additive manufacturing, components in the aluminum alloy, such as Zn and Mg, may volatilize. Therefore, it is desirable to superfluously add volatile components beforehand such that, even if the volatile components partially volatilize, their proper amounts will be maintained.

### [Additive manufactured object]

Since the grain refiner is trapped in a metal additive manufactured object (hereinafter sometimes simply referred to as the "object") obtained by additive manufacturing using, as a raw material, the aluminum alloy powder for additive manufacturing according to the present invention, aluminum crystals grow isotropically in the aluminum alloy matrix. As a result, the structure of the object formed does not have shapes which grow in one direction (such as columnar shapes or conical shapes), and instead turns into isotropic crystal grains. The term "isotropic" means that the ratio of the longest diameter of each crystal grain of the object to its shortest diameter is within the range of 3 or less. As a result, the object has isotropy in strength, too. The minimum ratio of the longest diameter to the shortest diameter is 1.

The average of the longest diameters of the crystal grains in the object is preferably not less than 1 µm and not more than 100 µm, and more preferably not less than 5 µm and not more than 50 µm. By setting the average of the longest diameters of the crystal grains within either of these ranges, the strength of the object tends to be high. This is because, within either of these ranges, precipitates of a compound of a metal element derived from the grain refiner, and the aluminum are scattered in the object structure, and act as nuclei for crystal formation, thereby fining the crystal grains. The grain refiner is especially preferably a compound of a group 4 element in the periodic table, because the precipitate crystals of such a compound are compatible with the Al crystals, and become effective nucleation sites for α-Al. Such precipitates include, e.g., TiAl₃, ZrAl₃ and HfAl₃.

The number of precipitates present in a field of view of 100 µm x 100 µm is preferably 1 to 10. By controlling the number of the precipitates within this range, isometric and sufficiently fined crystal grains are provided.

The object contains precipitates derived from the above grain refiner. The precipitates form when the grain refiner melts once and then solidifies again during additive manufacturing, and they have the same components as the grain refiner, and grain sizes similar to the particle diameter of the grain refiner. The content of the precipitates is preferably not less than 0.01% by mass and not more than 1.2% by mass relative to the entire additive manufactured object. Since the final object is produced using the above-described grain refiner, the content of the precipitates is similar to the amount of the grain refiner. Taking into consideration the fact that components in the aluminum alloy, such as Zn and Mg, could partially volatilize during additive manufacturing, resulting in a decrease in the amount of the aluminum alloy after additive manufacturing, the upper limit of the content of the precipitates is set larger than the upper limit of the content of the grain refiner.

### EXAMPLES

Examples and Comparative Examples are described below to further clarify the present invention, but the present invention is not limited thereto.

### <Evaluation method>

### [Production of additive manufactured objects]

Under the following conditions, a plurality of cylinders having a diameter of 12 mm and a height of 120 mm were formed vertically and horizontally relative to a base plate, thereby obtaining test pieces.
- Additive manufacturing device: produced by Mitsubishi Electric Corporation, electron beam metal 3D printer
- Electron beam output: 100W
- Preheating temperature: 400°C
- laminating pitch: 100 um
- Scanning speed: 280 mm/s
- Beam power: 240 W

### [Relative density of the additive manufactured objects]

By measuring, with the Archimedes method, the density of each test piece obtained, the relative density relative to the true density calculated from the composition was calculated.

### [Tensile strength and ductility of additive manufactured objects]

A JIS 14A comparative test piece was cut out from each object obtained, and a tensile test was conducted at room temperature using a universal test machine (INSTRON M4206), at a crosshead speed of 1 mm/min. The stress when the test piece broke was defined as tensile strength (MPa), and the rate (%) of the amount by which the test piece was stretched until the test piece broke was defined as ductility.

### [Condition observation of additive manufactured objects]

The condition of each additive manufactured object was observed visually using an optical microscope and a field emission scanning electron microscope (FE-SEM, produced by Philips (now Thermo Fisher Scientific), XL30S-FEG), and the surface condition, whether or not there are any defects, etc. were evaluated.

### [Observation of crystal grains]

The shapes and sizes of the crystal grains in each additive manufactured object were observed using EBSD (produced by TSL, OIM Analysis 5).

### [Analysis of precipitates]

The compositions, shapes, and sizes of the precipitates in each additive manufactured object were analyzed using an electron probe microanalyzer (EPMA, produced by JEOL Ltd., JX-8 530F).

### (Example 1)

By adjusting components in an A7075 alloy, adding 0.2 % by mass of TiB₂ to the A7075 alloy, and heating this alloy to 800°C, molten aluminum alloy was obtained. By spraying this with the rotating disk method, and then performing classification, an aluminum alloy powder for additive manufacturing was prepared of which the volume average particle diameter was 80 µm and the average degree of circularity was 0.98.

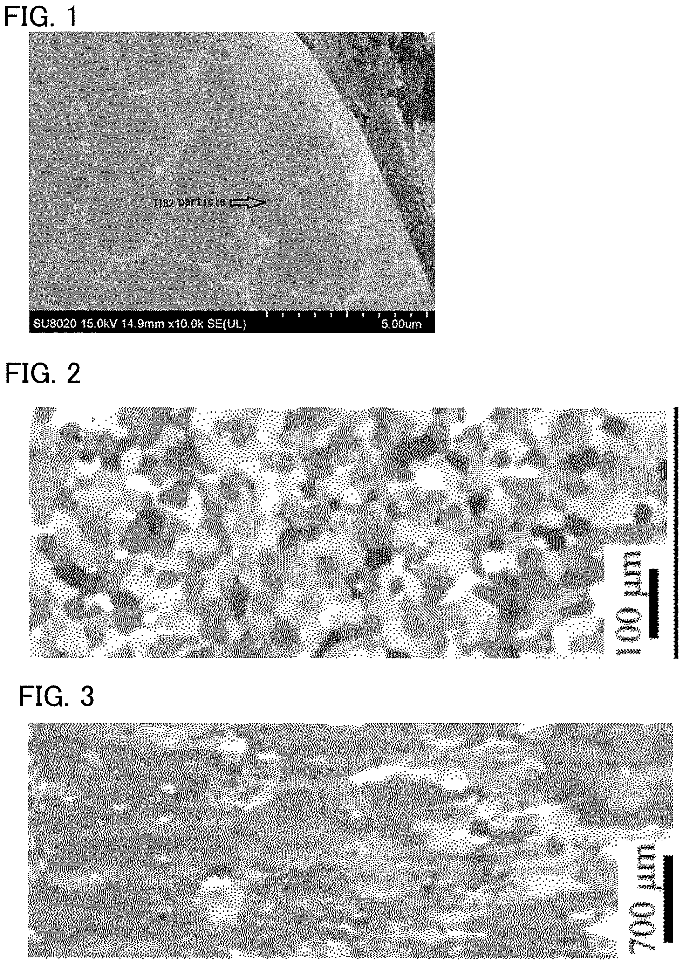

By observing the cross section of the obtained powder with the FE-SEM, it was confirmed that TiB₂ particles were trapped in the powder as shown in Fig. 1.

Next, by performing additive manufacturing with the above method, a test piece comprising a additive manufactured object was obtained. Using this, the above-described various evaluations were performed. The results are shown in Table 2.

Also, the obtained additive manufactured object was observed with the EBSD. The result is shown in Fig. 2.

### (Examples 2 to 8)

In the same manner as in Example 1, aluminum alloy powders according to Example 2 to 8 were prepared under the conditions shown in Table 1.

Next, by performing additive manufacturing with the above method, test pieces each comprising an additive manufactured object were obtained. Using these, the above-described various evaluations were performed. The results are shown in Table 2.

### (Comparative Example 1)

0.2 % by mass of a TiB₂ powder of which the volume average particle diameter is 2 µm was added to an aluminum alloy powder composed of A7075 (volume average particle diameter: 82 µm, degree of circularity: 0.97), and these powders were mixed together for one hour with a V blender.

Next, by performing additive manufacturing with the above method, a test piece comprising an additive manufactured object was obtained. Using this, the above-described various evaluations were performed. The results are shown in Table 2.

### (Comparative Examples 2 to 5)

In the same manner as in Example 1 and Comparative Example 1, aluminum alloy powders according to Comparative Example 2 to 5 were prepared under the conditions shown in Table 1.

Next, by performing additive manufacturing with the above method, test pieces each comprising an additive manufactured object were obtained. Using these, the above-described various evaluations were performed. The results are shown in Table 2.

Also, the additive manufactured object obtained in Comparative Example 2 was observed with the EBSD. The result is shown in Fig. 3.

### (Example 9)

The additive manufactured object obtained in Example 1 was subjected to T6 treatment. The T6 treatment was performed by, after subjecting the additive manufactured object to solution treatment at 460°C for 65 minutes, cooling it quickly in ice water, and then subjecting it to aging treatment at 120°C for 24 hours.

The additive manufactured object obtained by the T6 treatment had a tensile strength of 590 MPa and an elongation of 10%. No cracks were present in the additive manufactured object after the treatment, too. By observing the structure, it was confirmed that the average aspect ratio of the crystal grains was 1.5, and the average crystal grain size was 65 µm in terms of the longest diameter.

### (Comparative Example 6)

The additive manufactured object obtained in Comparative Example 1 was subjected to the T6 treatment under the same conditions as in the above Example.

The additive manufactured object obtained by the T6 treatment had a tensile strength of 350 MPa and an elongation of 4%. Solidification cracking in the additive manufactured object was not overcome even after the treatment. By observing the structure, it was confirmed that the average aspect ratio of the crystal grains was 6, and the average crystal grain size was 150 µm in terms of the longest diameter.

**[Table 1]**

| | | Metallic powder | | | | |
|---|---|---|---|---|---|---|
| | | Base alloy | Grain refiner | | Method of adding grain refiner | Cross-sectional observation (Condition of grain refiner) |
| | | | | Amount added | | |
| | | | | (Mass %) | | |
| Example | 1 | A7075 | TiB₂ | 0.2 | Added to molten alloy | Trapped |
| | 2 | A7075 | TiB₂ | 0.5 | Added to molten alloy | Trapped |
| | 3 | A7075 | TiB₂ | 0.05 | Added to molten alloy | Trapped |
| | 4 | A7075 | ZrB₂ | 0.2 | Added to molten alloy | Trapped |
| | 5 | A7075 | HfB₂ | 0.2 | Added to molten alloy | Trapped |
| | 6 | A7075 | TiC | 0.2 | Added to molten alloy | Trapped |
| | 7 | A6061 | TiB₂ | 0.2 | Added to molten alloy | Trapped |
| | 8 | A2024 | TiB₂ | 0.2 | Added to molten alloy | Trapped |
| Comparative Example | 1 | A7075 | TiB₂ | 0.2 | Mixed in powder | Separated |
| | 2 | A7075 | - | - | - | - |
| | 3 | A7075 | TiB₂ | 1.5 | Added to molten alloy | Trapped |
| | 4 | A6061 | - | - | - | - |
| | 5 | A2024 | - | - | - | - |

**[Table 2]**

| Used power | | | | Example | | | | | | | | Comparative Example | | | | |
|---|---|---|---|---|---|---|---|---|---|---|---|---|---|---|---|---|
| | | | | 1 | 2 | 3 | 4 | 5 | 6 | 7 | a | 1 | 2 | 3 | 4 | 5 |
| Properties of addtive manufactured object | Mechanical properties | Relative density | | 100.0 | 99.8 | 99.3 | 99.9 | 99.5 | 99.4 | 99.2 | 99.1 | 98.7 | 98.9 | 99.0 | 98.7 | 99.0 |
| | | Forming direction: vertical direction | Tensile strength (MPa) | 390 | 370 | 340 | 360 | 350 | 340 | 310 | 350 | 320 | 350 | 260 | 270 | 320 |
| | | | Ductity (%) | 14 | 10 | 16 | 14 | 11 | 12 | 20 | 15 | 4 | 8 | 4 | 9 | 10 |
| | | Forming direcion: horizontal direction | Tensile strength (MPa) | 380 | 350 | 360 | 340 | 330 | 330 | 300 | 360 | 280 | 270 | 250 | 210 | 270 |
| | | | Ductility (%) | 14 | 10 | 16 | 14 | 17 | 12 | 20 | 15 | 3 | 4 | 3 | 4 | 4 |
| | Formed object structure | Average aspect ratio of crystal grains | | 1.5 | 1.4 | 20 | 1.8 | 1.9 | 2.5 | 1.4 | 1.3 | 5.0 | 7.0 | 1.9 | 8.0 | 7.0 |
| | | Average crystal gain size (µm) | | 30 | 49 | 40 | 50 | 70 | 75 | 40 | 35 | 140 | 200 | 45 | 300 | 350 |
| | | Condition of precipitetes (Note 1) | | Scattered | Scattered | Scattered | Scattered | Scattered | Scattered | Scattered | Scattered | Segregated | Not detected | Segregated | Not detected | Not detected |
| | Solidification cracking | | | No cracking occurred | No cracking occurred | No cracking occurred | No cracking occurred | No cracking occurred | No crackig occurred | No cracking occurred | No cracking occurred | Cracking occurred | Cracking occurred | No cracking occurred | Cracking occurred | Cracking occurred |

| | | | | | | | | | | | | | | | | |
|---|---|---|---|---|---|---|---|---|---|---|---|---|---|---|---|---|
| Note 1:The contition of precipitates of which the longest sizes are net more than 5 µm includes group 4 elements in the periodic table | | | | | | | | | | | | | | | | |

### (Results)

The above results show that, by performing additive manufacturing using the aluminum alloy powder for additive manufacturing according to the present invention, it is possible to obtain an additive manufactured object having isotropy in both tensile strength and ductility (elongation rate).

Also, the above results show that the crystal grains of the additive manufactured object in Example 1, in which a predetermined aluminum alloy powder for additive manufacturing trapping a predetermined grain refiner therein was used, have isotropy with the ratio of the longest diameter to the shortest diameter of each crystal grain being 3 or less, whereas the crystal grains of the additive manufactured object in Comparative Example 2, in which no grain refiner was used, has an elongated shape with the ratio of the longest diameter to the shortest diameter of each crystal grain being more than 3, and thus has anisotropy. These can be confirmed from the results of Figs. 2 and 3, too. That is, in Fig. 2 (Example 1), many of the crystal grains have an isotropic shape with the ratio of the longest diameter to the shortest diameter being 3 or less, whereas in Fig. 3 (Comparative Example 2), many of the crystal grains have an elongated shape with the ratio of the longest diameter to the shortest diameter being more than 3.

## Claims

1. An aluminum alloy powder for additive manufacturing, comprising particles of an aluminum alloy in which not less than 0.01% by mass and not more than 1% by mass of a grain refiner is trapped.

2. The aluminum alloy powder according to claim 1, wherein the grain refiner is at least one selected from borides and carbides of group 4 elements.

3. The aluminum alloy powder according to claim 1 or 2, wherein the grain refiner is TiB₂.

4. The aluminum alloy powder according to any of claims 1 to 3, wherein the aluminum alloy forming the aluminum alloy powder is composed of at least one aluminum alloy selected from 2000 series alloys, 6000 series alloys and 7000 series alloys.

5. A method for producing a metal additive manufactured object comprising the step of forming, by additive manufacturing, the metal additive manufactured object from the aluminum alloy powder according to any of claims 1 to 4,
wherein the metal additive manufactured object has a solidified structure of crystal grains,
wherein a number average of ratios of longest to shortest diameters of the respective crystal grains is not less than 1 and not more than 3, and
wherein precipitates of which longest diameters are not more than 5 um are scattered in the crystal grains of the solidified structure, the precipitates comprising at least one kind of precipitates selected from borides and carbides of group 4 elements.

6. A metal additive manufactured object,
wherein the metal additive manufactured object has a solidified structure of crystal grains,
wherein a number average of ratios of longest to shortest diameters of respective crystal grains is not less than 1 and not more than 3,
wherein precipitates of which longest diameters are not more than 5 µm are scattered in the crystal grains of the solidified structure, the precipitates comprising at least one kind of precipitates selected from borides and carbides of group 4 elements, and
wherein the metal additive manufactured object contains not less than 0.01% by mass and not more than 1.2% by mass of the precipitates.
